# EUROPÄISCHE PATENTSCHRIFT

(11) **EP 3 283 261 B1**
(45) Veröffentlichungstag und Bekanntmachung des Hinweises auf die Patenterteilung: **18.08.2021**
(21) Anmeldenummer: 16725348.3
(22) Anmeldetag: 10.04.2016
(51) Int. Cl.: B25J 15/02, F16C 29/12

(54) **PRÄZISIONSGREIFVORRICHTUNG**
PRECISION GRIPPING DEVICE
DISPOSITIF DE PRÉHENSION DE PRÉCISION

(30) Priorität: 11.04.2015 DE 102015004404
(43) Veröffentlichungstag der Anmeldung: 21.02.2018
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2016/000148
(87) Internationale Veröffentlichungsnummer: WO 2016/165681

(56) Entgegenhaltungen:
- DE-A1- 19 513 739
- DE-A1- 19 931 133
- DE-U1- 20 105 449
- DE-U1-202012 003 942

## Beschreibung

Die Erfindung betrifft eine Greifvorrichtung mit bewegliche Greifelemente tragenden Schlitten, wobei die Schlitten in Greifrichtung der Greifelemente hintereinander in einer gemeinsam genutzten, in einem Grundkörper angeordneten, zu den Greifelementen hin zumindest bereichsweise offenen Führungsnut parallel zur Greifrichtung - zwischen einer Öffnungs- und Schließstellung - antreibbar geführt und quer zur Greifrichtung allseitig abstützend gelagert sind.

Aus der DE 103 44 255 A1 ist eine derartige Parallelgreifvorrichtung bekannt. Bei diesem Gegenstand sind die Schlitten direkt im Grundkörper gelagert.

Die DE 201 05 449 U1 beschreibt einen fluidbetätigten Greifer, bei dem zwischen der gehäuseseitigen Führungsnut, in der die greifelementetragenden Schlitten gelagert sind, und den Schlitten zylindrische Führungsstifte lose eingelegt sind. Die Führungsstifte werden jeweils bereichsweise von den Schlitten und der Führungsnut umgriffen.

Aus der DE 195 13 739 A1 ist eine Parallelgreifvorrichtung mit einem Synchronisationsantrieb bekannt. In der Führungsnut des Gehäuses der Greifvorrichtung sind hintereinander zwei Schlitten wälzgelagert angeordnet. Jeder Schlitten wird über eine Zylinder-Kolben-Einheit angetrieben, wobei die Schlitten über ein Hebel- oder ein Zahnstangengetriebe synchronisiert sind. Die die Führungsnut beidseitig umgebenden Gehäusebereiche können zur Spielminimierung gegenseitig mittels Schrauben verspannt werden.

Die DE 20 2012 003 942 U1 beschreibt einen Führungsschlitten, der gleitgelagert entlang einer Führungsschiene verfahrbar angeordnet ist. Die Führungsschiene hat sechs Kontaktflächen, von denen sich je zwei paarweise gegenüberliegen. Für jedes Kontaktflächenpaar ist im Führungsschlitten ein verstellbarer Schiebekeil angeordnet. Jeder der drei Schiebekeile wird über ein im Schlittengehäuse gelagertes Schraubgetriebe zur Führungsspieleinstellung verstellt.

Der vorliegenden Erfindung liegt die Problemstellung zugrunde, eine Greifvorrichtung zu entwickeln, die bei großer Klemmkraft einen geringen Bauraumbedarf und eine geringe Eigenmasse hat. Zudem soll das Führungssystem hoch belastbar, hochgenau und verschleißfest gefertigt sein.

Diese Problemstellung wird zum einen mit den Merkmalen des Patentanspruchs 1 gelöst. Dabei weist die offene Führungsnut zwei einander gegenüberliegende Führungsnutwandungen auf, die spiegelbildlich zu einer vertikalen Führungsmittenlängsebene orientiert sind. In jeder Führungsnutwandung ist eine Schienenführungsnut angeordnet. In jeder Schienenführungsnut ist mindestens eine Schlittenführungsschiene befestigt. Mindestens eine Schienenführungsnut und mindestens eine darin gelagerte Schlittenführungsschiene hat pro Schlitten oder pro Schlittenpaar jeweils eine sich gegenseitig in einer Kontaktfuge kontaktierende Fläche, die gegenüber der Schlittenverfahrrichtung in einem Winkel von 0,3 bis 1,3 Winkelgraden geneigt ist. Der Bereich des Querschnittes der Schlittenführungsschiene, der aus der Schienenführungsnut herausragt, hat die Form eines Trapezes.

Zum anderen wird die Problemstellung mit den Merkmalen des Patentanspruchs 7 gelöst. Hiernach wird ein Verfahren zur Erhöhung der Führungsgenauigkeit der bewegliche Greifelemente tragenden Schlitten beschrieben. In den Schlittenführungsnuten oder Führungsnutenabschnitten des Grundkörpers sind Schlittenführungsschienen oder Führungsteilschienen angeordnet, die im Bereich des jeweiligen Querschnitts der einzelnen Schlittenführungsschiene oder der einzelnen Führungsteilschiene, der aus der Schienenführungsnut oder dem jeweiligen Führungsnutenabschnitt herausragt, jeweils die Form eines Trapezes haben. Dabei ist bei Schienenführungsnuten oder Führungsnutenabschnitten und Schlittenführungsschienen oder Führungsteilschienen mit gegenüber der vertikalen Führungsmittenlängsebene geneigten Kontaktfugen das Führungsspiel der Schlitten durch ein Verschieben der Schlittenführungsschienen oder Führungsteilschienen in Schlittenver-fahrrichtung um ± 1 bis 3 mm einstellbar.

Besonders klein bauende Greifvorrichtungen benötigen zum Greifen von Werkstücken Greifbacken, die im Verhältnis zu den relativ kurzen, die Greifbacken tragenden und bewegenden Schlitten sehr lang sind. Durch die kurze Führungslänge der Schlitten im Gerätegehäuse der Greifvorrichtung sind die Greifkräfte durch erhöhten Führungsverschleiß und einem damit zwangsläufig verbundenen vergrößerten Führungsspiel unnötig beschränkt. Mit der vorliegenden Erfindung wird die Möglichkeit geschaffen, in Gerätegehäuse bzw. Grundkörper separate Führungsschienen zur Lagerung und Führung der Schlitten und/oder Greifbacken nach individuellen Bauteileinzelvermessungen und nach Geometriemaßen ausgesuchten Bauteilzuordnungen so einzubauen, dass das Führungsspiel auf wenige Mikrometer genau eingestellt werden kann.

Alternativ werden zur Führungsspieleinstellung verschiedene Bauteile nach dem Schiebekeilprinzip gepaart kombiniert, um durch ein gegenseitiges Verschieben der kombinierten Bauteile eine führungsspieleinstellende bzw. führungsspielaufbrauchende Zustellung zu erzielen. Kombiniert werden beispielsweise längsgeteilte mit Keilflächen versehene Führungsschienen.

Eine andere Kombination stellen Führungsschiene und Gehäuse dar. Hier wird der Grund der gehäuseseitigen Führungsschienennut sowie die Rückseite der Führungsschiene als Keilfläche ausgebildet. Auch ist es möglich, zumindest einen eine Führungsnut aufweisenden Schiebekeil am Schlitten montierbar zu gestalten, so dass die Schiebekeilfuge zwischen dem führungsnuttragenden Schiebekeil und dem Schlitten angeordnet ist.

Mit Hilfe des Einmessens oder des Relativverstellens einiger das Spiel beeinflussender Führungsbestandteile lassen sich die Führungen mit einer Spielabweichung vom 2 bis 10 Mikrometer problemlos einstellen. Ggf. kann die Verstellmöglichkeit auch genutzt werden, um ein wartungsbedingtes Spielnachstellen durchzuführen.

Je nach Greifaufgabe können Führungsschienen eingesetzt werden, die z.B. tragfähig sind oder eine verschleißfeste oder reibungsarme Oberfläche aufweisen. Je nach Werkstoffwahl lassen sich diese Eigenschaften auch kombinieren.

Im Ausführungsbeispiel sind die Schlitten nur beispielhaft hintereinander in nur einer Führungsschiene gelagert.

Angetrieben werden die Schlitten über ein Getriebe, z.B. ein Doppelschiebekeilgetriebe, auf das z.B. eine pneumatisch oder hydraulisch betriebene Zylinder-Kolbeneinheit wirkt. Dabei wird die Richtung der Linearbewegung der Kolbenstange mittels eines Doppelschiebekeils oder mittels zweier Schiebekeile beispielsweise um ca. 90 Winkelgrade umgelenkt.

Anstelle des Doppelschiebekeilgetriebes können entsprechend auch Kurven-, Hebel-, Räder- oder Zugmittelgetriebe eingesetzt werden. Auch Getriebekombinationen sind möglich. Ferner ist die Anzahl der Greifbacken bzw. Schlitten nicht auf zwei beschränkt.

In den Ausführungsbeispielen werden nur Teile von Parallelgreifern gezeigt. Selbstverständlich können die meisten Teile mit Ausnahme des Gehäuses auch für Drei-, Vier- und Mehrbacken-, Mehrschlitten- oder Zentrischgreifer verwendet werden, sodass die dargestellte Problemlösung auch dort eingesetzt werden kann. Bei drei-, vier- oder Mehrbackengreifern werden in den beispielsweise sternförmig oder parallel angeordneten Führungsnuten pro Nut in der Regel zwei Schlittenführungsschienen vorgesehen, deren Werkstoff belastbarer ist als der des Grundkörpers. Es ist aber auch möglich, pro Führungsnut nur eine, drei oder mehrere einzelne Schlittenführungsschienen einzubauen.

Weitere Einzelheiten der Erfindung ergeben sich aus den Unteransprüchen und der nachfolgenden Beschreibung schematisch dargestellter Ausführungsformen.
- Figur 1:: Perspektivische Ansicht eines Parallelgreifers;
- Figur 2:: Längsschnitt durch den Parallelgreifer nach Figur 1, jedoch mit Greifbacken. Der rechte Greifbacken ist geöffnet;
- Figur 3:: Perspektivische Ansicht des Grundkörpers des Parallelgreifers nach Figur 1;
- Figur 4:: Perspektivische Ansicht des unteren Deckels mit aufgelegter Flachdichtung;
- Figur 5:: Perspektivische Ansicht des Kolbens ohne Kolbendichtung von unten;
- Figur 6:: Querschnitt mittig durch den Parallelgreifer;
- Figur 7:: Querschnitt durch den Parallelgreifer im Bereich der vertikalen Befestigungsbohrungen;
- Figur 8:: Längsschnitt durch einen Greifer mit zwei keilförmigen Führungsteilschienen in der horizontalen Führungsmittenlängsebenen;
- Figur 9:: Führungsteilschinene nach Figur 8;
- Figur 10:: Querschnitt durch einen Schlitten, rechtsseitig mit einsetzbarer Führungsnut und Führungsschiene und linksseitig mit längsgeteilter Führungsschiene, vergrößert;
- Figur 11:: Perspektivische Ansicht einer tiefenverstellbaren Führungsschiene von vorn;
- Figur 12:: Perspektivische Ansicht einer tiefenverstellbaren Führungsschiene von hinten;
- Figur 13:: Perspektivische Ansicht der Schlitten, der Führungsabdichtungen und des Doppelkeils von oben;
- Figur 14:: Perspektivische Ansicht der Schlitten, der Führungsabdichtungen und des Doppelkeils von unten;
- Figur 15:: Teilquerschnitt durch die Führungsnutdichtung quer zur Richtung der Führungsnut, vergrößert;
- Figur 16:: Teilquerschnitt durch die Führungsnutdichtung parallel zur Richtung der Führungsnut, vergrößert.

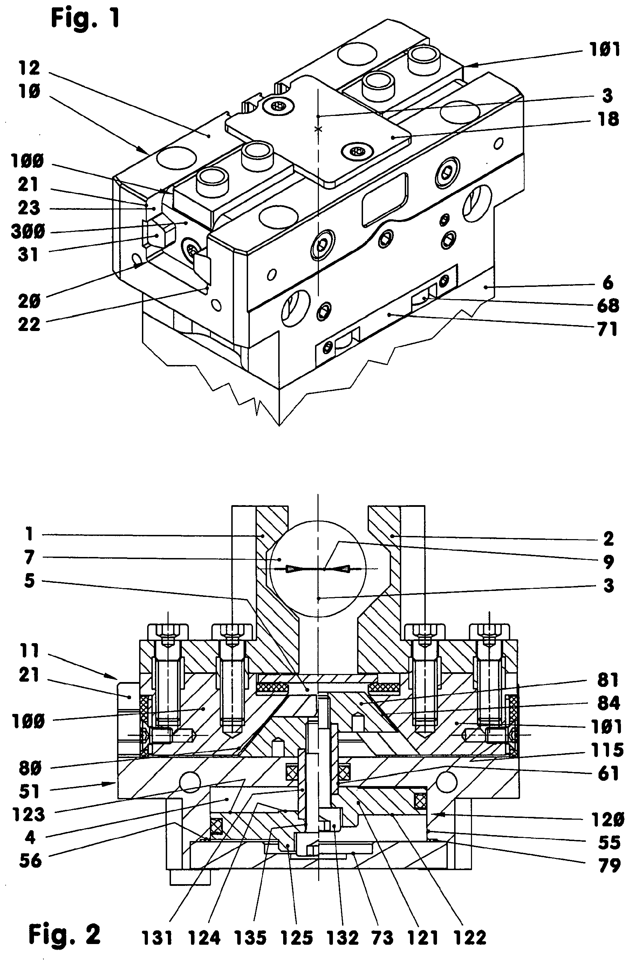

Die Figur 1 zeigt eine Parallelgreifvorrichtung mit zwei jeweils auf Schlitten (100, 101) sitzenden Greifbacken (1, 2). Die in ihrer Längsrichtung beweglichen Schlitten (100, 101) sind in einem Gehäuse bzw. Grundkörper (10) in einer Führungsnut (20) z.B. gleitgelagert geführt. Das die Führungsnut aufnehmende Gehäuse (10) umgibt ferner eine z.B. doppeltwirkende Zylinder-Kolben-Einheit (120). Die Zylinder-Kolben-Einheit wirkt über ein Doppelschiebekeilgetriebe (80) auf die Schlitten (100, 101). In Figur 1 ist die Parallelgreifvorrichtung über ihren Grundkörper (10) auf einem sie tragenden Maschinen- bzw. Handhabungsgeräteteil (6) montiert. Einige Teile der Greifvorrichtung werden zur Erzielung einer hochgenauen Schlittenführung verstellbar ausgeführt oder durch präzise - nach eng tolerierten Massen - vorsortierte Teile zusammengestellt.

Die Figur 2 stellt die Parallelgreifvorrichtung im Längsschnitt mit zwei aufgeschraubten Greifbacken (1, 2) dar. Die Greifbacken sollen ein z.B. zylinderförmiges Werkstück (7) greifen. Der Greifbacken (1) der linken Vorrichtungsseite liegt am Werkstück (7) an, während der Greifbacken (2) der rechten Vorrichtungsseite in geöffneter Position dargestellt ist. Im Gegensatz zur Darstellung nach Figur 2 bewegen sich die Greifbacken (1, 2) getriebebedingt immer zwangsläufig synchron aufeinander zu oder voneinander weg.

Der z.B. im Wesentlichen quaderförmige Grundkörper (10) der Parallelgreifvorrichtung besteht aus einem oberen Führungsabschnitt (11) und einem unteren Antriebsabschnitt (51). Er ist beispielsweise aus der Aluminiumlegierung AlMgSi1 gefertigt. Die Länge des Grundkörpers (10) ist z.B. fast doppelt so lang wie seine Breite und die Grundkörperhöhe. Im Ausführungsbeispiel ist der Grundkörper (10) 50 mm lang. Bei dieser Baugröße beträgt der maximale Hub jedes Schlittens (100, 101) bzw. Greiferbackens (1, 2) z.B. 2,625 mm.

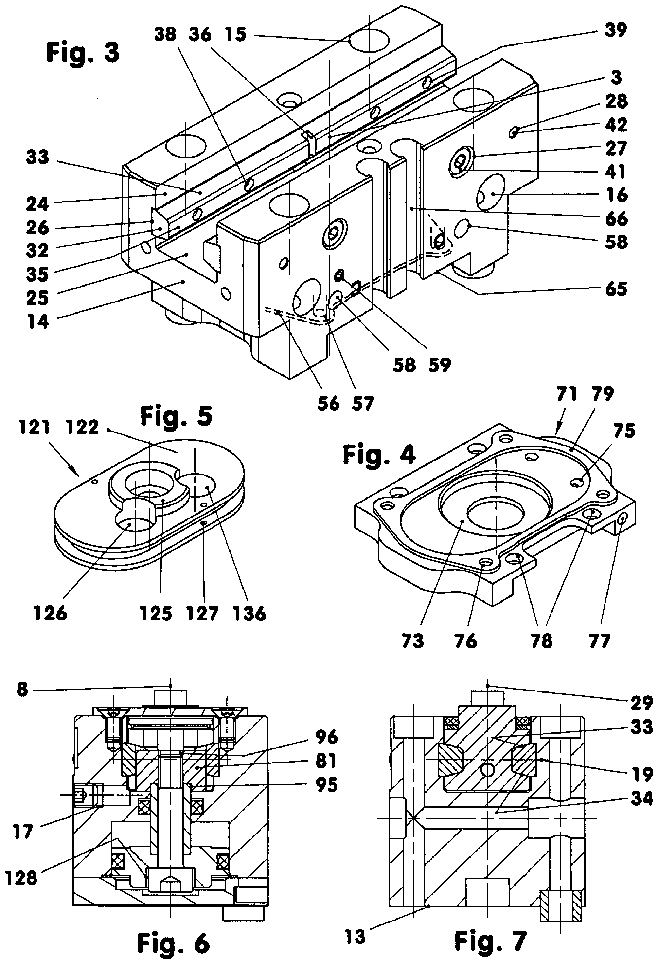

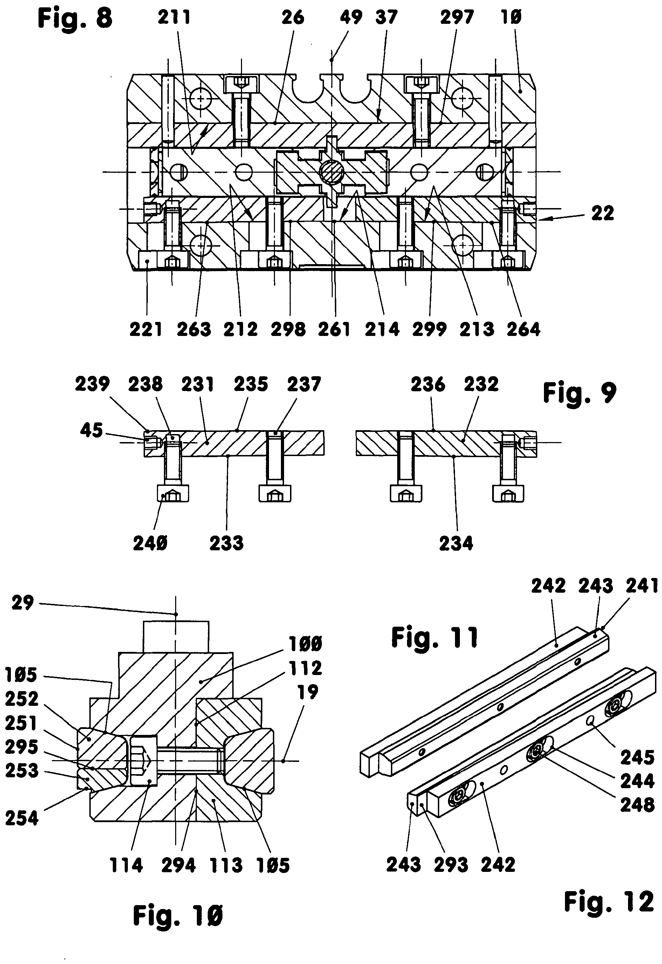

Der Führungsabschnitt (11) nimmt zentral die nach oben - zu den Greifelementen (1, 2) hin - offene Führungsnut (20) auf, vgl. Figur 3, deren z.B. rechteckiger Querschnitt eine Breite von 10,7 mm und Höhe von 9,3 mm misst. In den planen Seitenwandungen (23, 24) der Führungsnut (20) ist jeweils eine flache, z.B. 0,65 mm Tiefe und 4 mm breite Schienenführungsnut (26) zur späteren Aufnahme einer Führungsschiene (31, 32) eingearbeitet. Die einzelne Schienenführungsnut (26) hat einen rechteckigen Querschnitt, einen planen Nutgrund (211) und z.B. plane Seitenwandungen. Die Schienenführungsnuten (26) erstrecken sich hier über die gesamte Länge des Grundkörpers (10). Mittig zwischen den planen Seitenwandungen (23, 24) der Führungsnut (20) liegt die vertikale Führungsmittenlängsebene (29), vgl. Figur 7. Die in den Seitenwandungen eingelassenen Führungsnuten sind bei einigen Ausführungsbeispielen, vgl. z.B. Figuren 8 bis 12, von einer Spiegelung an der Führungsmittenlängsebene (29) ausgeschlossen. Senkrecht zur vertikalen Führungsmittenlängsebene (29) ist die horizontale Führungsmittenlängsebene (19) angeordnet. Sie liegt mittig in den Schienenführungsnuten (26).

Jede Führungsschiene (31, 32) ist hier eine aus einem nichtrostenden Stahl, z.B. aus einem X90CrMoV18, gefertigte, im Wesentlichen trapezförmige Stange. Die Breite der sich z.B. über die Länge des Grundkörpers (10) erstreckende Führungsschiene (31, 32) beträgt im Ausführungsbeispiel 4 mm. Die Höhe der Führungsschiene (31, 32) misst 75% ihrer Breite. Aufgrund der hohen Festigkeit einer derartigen Führungsschiene (31, 32) können die Schlitten größere Momente auf den Grundkörper (10) übertragen. Demzufolge kann die Greifvorrichtung größere Greifkräfte auf das aufzunehmende Werkstück (7) ausüben.

Die einzelne Führungsschiene (31, 32) hat einen sechseckigen Querschnitt und weist zwei einander spiegelsymmetrisch gegenüberliegende Tragflanken (33, 34) auf, die einen Winkel von 30 bis 90 Winkelgraden einschließen. Im Ausführungsbeispiel beträgt der Winkel 30 Winkelgrade. Die Spiegelebene (19) halbiert die Führungsschiene (31, 32). Die Tragflanken (33, 34) überdecken mindestens 75 % der Führungsschienenhöhe, wobei die Führungsschienenhöhe parallel zu den Mittellinien der die Führungsschiene (31, 32) positionierenden Passstifte (42) gemessen wird. Zwischen den Tragflanken (33, 34) und der dazwischen eingeschlossenen, zur vertikalen Mittenlängsebene (8) parallelen freien Fläche (35) befinden sich Kantenabrundungen, deren Radien jeweils 0,5 mm messen.

Mindestens eine der Führungsschiene (31, 32) weist mittig eine Quernut (36) mit der Breite von z.B. 1,2 mm und der Tiefe von z.B. 1,4 mm auf. Diese Quernut (36) dient der zusätzlichen verschleißfesten Führung des im Doppelschiebekeilgetriebe (80) verwendeten Doppelschiebekeils (81). Ggf. können die einzelnen Führungsschiene (31, 32) auch aus zwei oder mehreren hintereinander angeordneten Abschnitten aufgebaut sein.

Im Ausführungsbeispiel sind die Führungsschienen (31, 32) jeweils mit zwei Senkschrauben (41) am Grundkörper (10) befestigt, vgl. Figur 1 und 3. Vorab werden die Führungsschienen (31, 32) jeweils mit Hilfe von zwei Passstiften (42) am Grundkörper (10) positioniert. Die Passstifte sind jeweils im Bereich zwischen den Verschraubungen und der nächstgelegenen Grundkörperstirnseite (14) angeordnet. Die Bohrungen (39) für die Passstifte (42) und die Gewindebohrungen (38) liegen jeweils auf der horizontalen Mittenlängsebene der Führungsschienen (31, 32).

In Figur 8 ist in der rechten Nutseite (22) der Führungsnut (20) eine Schienenführungsnut mit drei Nutgrundabschnitten (212, 213, 214) eingearbeitet. Ein mittlerer, z.B. 6 mm langer Nutgrundabschnitt (214) liegt z.B. spiegelsymmetrisch zum Nutgrund der gegenüberliegenden Schienenführungsnut. Links davon schließt sich ein Nutgrundabschnitt (212) an, der gegenüber dem Abschnitt (214) unter einem Winkel von z.B. 0,573 Winkelgraden nach außen hin abweicht. Dadurch wird der Abstand der Nutgründe zur linken Stirnseite des Grundkörpers (10) hin breiter. Der Nutgrundabschnitt (213) ist das Spiegelbild zum Nutgrundabschnitt (212). Als Spiegelebene dient hier die zwischen den Stirnseiten des Grundkörpers (10) gelegene vertikale Mittenquerebene (49).

Vor jedem Nutgrundabschnitt (212, 213) ist eine Führungsteilschiene (231, 232) so angeordnet, vgl. Figur 9, dass sie mit ihrer jeweiligen Unterseite (233, 234) anliegt. Beide Führungsteilschienen (231, 232) haben im Schnitt nach den Figuren 8 und 9 die Form eines Trapezes. Die Stirnflächen, von denen jeweils die äußere eine Gewindebohrung (45) aufweist, sind beispielsweise parallel zueinander ausgerichtet. Sie schließen zudem mit der Oberseite (235, 236) der einzelnen Führungsteilschiene (231, 232) jeweils einen rechten Winkel ein. Beide Oberseiten (235, 236) liegen auf parallelen Ebenen, die ggf. deckungsgleich sind. Die einzelne Führungsteilschiene (231, 232) ist z.B. drei Millimeter kürzer als die halbe Grundkörperlänge. Die Nutgrundabschnitte (212, 213) und die dazugehörenden Unterseiten (233, 234) der Führungsteilschienen (231, 232) bilden die Kontaktfugen (298, 299).

Jede Führungsteilschiene (231, 232) hat z.B. zwei Gewindebohrungen (237, 238), von denen Letztere zum Schutz der Dichtungskörper (301, 302) vor Verschleiß eine Gewindesacklochbohrung ist. Ferner weist die Oberseite (235, 236) im Bereich der äußeren Stirnseite eine 5°-Fase (239) auf, um beim ggf. möglichen Vorbeifahren des jeweiligen Schlittens (100, 101) den entsprechenden Dichtungskörper (301, 302) zu schonen.

Um die Führungsteilschiene (231, 232) gegenüber dem Grundkörper (10) für eine Spieleinstellung verschieben zu können, ist jede Führungsteilschiene (231, 232) mit den in die Gewindebohrungen (327, 238) eingeschraubten Schrauben (240) in entsprechenden Langlöchern (221) gelagert. Das Verschieben erfolgt beispielsweise mit Hilfe eines Werkzeugs, dessen Spitze ein Außengewinde aufweist, das in die stirnseitige Gewindebohrung (45) der jeweiligen Führungsteilschiene (231, 232) vorübergehend eingeschraubt wird.

Vor dem Festziehen der Schrauben (240) wird die jeweilige Führungsteilschiene (231, 232) passend zum einzustellenden Spiel längsverschoben. Bei der hier beispielsweise vorgegebenen Kontaktfugenneigung bewirkt ein Verschieben um einen Millimeter eine Spielveränderung von 7,5 Mikrometer.

Alternativ zu der in Figur 8 dargestellten Neigung der Nutgrundabschnitte (212, 213) können diese auch so angeordnet werden, dass sich der Nutgrundabstand in Richtung der Stirnseiten des Grundkörpers (10) verringert. Auch ist es möglich, beide Nutgrundabschnitte (212, 213) mit der gleichen Neigung auszustatten, so dass deren Flächennormalen parallel zueinander ausgerichtet sind.

In einer weiteren Ausführungsform hat die verstellbare Führungsschiene (31) und/oder (32) eine Länge, die z.B. 3 bis 6 mm kürzer ist als die Gesamtlänge des Grundkörpers (10). Sie führt in diesem Falle bei einem Parallelgreifer beide Schlitten (100, 101) gemeinsam. Ihr Befestigungs- und Verstellsystem ist eine verlängerte Ausgabe der kurzen Führungsteilschienen (231, 232).

Selbstverständlich können die Kontaktfugen (297 - 299) zwischen den Führungsschienen bzw. Führungsteilschienen auch direkt - unter Weglassung der Schienenführungsnuten (26, 261) - auf den Seitenwandungen (23, 24) liegen.

Die Figur 10 zeigt einen Schlitten (100, 101) im Querschnitt. Der Schlitten (100, 101) weist hier auf seiner rechten Seite eine quaderförmige Ausnehmung (112) auf, in die ein Führungsschienenträger (113) eingesetzt ist. Der Führungsschienenträger (113), der an seiner Außenseite eine Schlittenführungsnut (105) aufweist, ist mittels einer Schraube (114) am Schlitten (100, 101) starr befestigt. Die langlochförmige Senkung für den Kopf der Schraube (114) befindet sich im Nutgrund der linken Schlittenführungsnut (105). Im montierten Zustand haben der Schlitten (100) und der Führungsschienenträger (113), mit Ausnahme der spielverstellungsbedingten Breite, z.B. die gleiche Außenkontur wie der Schlitten (100) aus Figur 7.

Zwischen dem Schlitten (100) und dem Führungsschienenträger (113) liegt die Kontaktfuge (294), in der sich die geneigte Wandung der Ausnehmung (112) und die geneigte Wandung des Führungsschienenträgers (113) treffen. Die Kontaktfuge (294) schließt mit der vertikalen Führungsmittenlängsebene (29) einen Winkel von 0,3 bis 1,3 Winkelgraden ein. Zur Veränderung des Abstandes der beiden Schlittenführungsnuten (105), z.B. im 0 bis 50 µm-Bereich, wird der Führungsschienenträger (113) in Schlittenverfahrrichtung (9) gegenüber dem Schlitten (100) verschoben. Die senkrecht zur geneigten Kontaktfuge (294) orientierte Wandung der Ausnehmung (112) dient dem Führungsschienenträger (113) als feinbearbeitete Anlage- und Verstellführungsfläche.

Die Figuren 11 und 12 zeigen zwei Ansichten einer fast längsgeteilten Führungsschiene (241), in der die zur Spielfeinverstellung erforderliche geneigte Kontaktfuge (293) integriert ist. Die Führungsschiene (241) besteht aus einem Sockel (242) und einem Trapezaufsatz (243). Letzterer beinhaltet das Trapezprofil der Führungsschiene (241).

Die Unterseite des keilförmigen Sockels (242) liegt im Nutgrund (211) der Schienenführungsnut (26) auf. Nach Figur 12 befinden sich in der Unterseite des Sockels (242) z.B. drei gestufte Langlöcher (244) und zwei Befestigungsbohrungen (245). Die Oberseite des Sockels (242) ist eine ebene Keilfläche, die mit der Sockelunterseite einen Winkel von 0,3 bis 1,3 Winkelgraden einschließt. Der Sockel (242) verjüngt sich somit in Richtung der Schlittenverfahrrichtung (9).

In den Langlöchern (244) sitzen die Schrauben (248), die den Sockel (242) verschiebbar mit dem keilförmigen Trapezaufsatz (243) verbinden. Die Unterseite des Trapezaufsatzes (243) hat die gleiche Neigung wie die kontaktierte Oberseite des Sockels (242).

Die Befestigungsbohrungen (245) dienen der Befestigung der montierten und auf eine festgelegte Höhe eingestellten Führungsschiene (241) zum Festschrauben im Gehäuse (10). Durch die Aufnahme der Schiebekeilkontur und die Tiefe der Langlöcher (244) ist die Ausdehnung der Führungsschiene (241) quer zur Schlittenverfahrrichtung (9) und parallel zur Ebene (29) vergrößert ausgebildet. In der Folge ist die Tiefe der diese Führungsschiene (241) aufnehmenden Schienenführungsnut (26) größer gestaltet.

Nach Figur 10 befindet sich in der linken Schlittenführungsnut (105) eine weitere fast längsgeteilte Führungsschiene (251), die aus einem oberen (252) und unteren Schienenteil (253) besteht. Beide Schienenteile (252, 253) sind keilförmig ausgebildet, wobei ihre eine geneigte Kontaktfuge (295) bildenden Keilflächen gegenüber der horizontalen Führungsmittenlängsebene (19) um einen Winkel von 0,3 bis 1,3 Winkelgraden geneigt sind. Die Keilflächen sind an ihren Rändern angefast. Das obere, breitere Schienenteil (252) wird mit dem Grundkörper (10) verschraubt.

Die untere Wandung des Schienenteils (253) ist gegenüber den Führungsschienen (31, 32; 241) mittels einer Ausnehmung (254) um mehrere zehntel Millimeter zurückgesetzt gestaltet, um bei einer - für die Spielminimierung - gezielten Verbreiterung in der Ebene (29) nicht an der unteren Kante der Schlittenführungsnut (105) anzustoßen, vgl. Figur 10.

Bei dieser Führungsschiene (251) wird z.B. durch Einmessen des unteren Schienenteils (253) in eine vormontierte Baugruppe die für die vorgegebene Genauigkeit erforderliche Lage erfasst. Die vormontierte Baugruppe besteht aus dem Grundkörper (10), dem Schlitten (100) und/oder (101) und einer schon fixierten regulären Führungsschiene (31) oder (32). Die Teile (252, 253) werden in den noch freien, von der Schienen- (26) und der Schlittenführungsnut (105) umgebenen Raum mit dem vorgegebenen Spiel eingesetzt. Ihre gegenseitige, in der Schlittenverfahrrichtung (9) spielbedingt vorhandene Relativlage wird erfasst und/oder markiert. Nach dem Herausziehen der Teile aus der vormontierten Baugruppe werden die Schienenteile (252, 253) gemäß dem Versatzmaß oder der Markierung entlang der Außenkante der Kontaktfuge miteinander laserverschweißt. Abschließend wird die nun einteilige Führungsschiene (251) wieder in die Baugruppe integriert.

Es ist möglich die verschiedenen Führungsschienen und Führungsteilschienen mit ihren Gegenstücken auch mit unterschiedlichen Schiebekeilsystemen in einer Greiferführung miteinander zu kombinieren.

Der unterhalb des Führungsabschnittes (11) gelegene Antriebsabschnitt (31) nimmt im Wesentlichen die Zylinder-Kolben-Einheit (120) und die betätigungsmittelführenden Kanäle und Durchbrüche auf. In den seitlichen Bereichen unterhalb des Führungsabschnittes (11) ist der Grundkörper (10) beidseitig um circa 12 % der Gesamtgrundkörperlänge auf einer Höhe von 38,3 % der Grundkörpergesamthöhe verkürzt ausgebildet.

Die Unterseite (13) des Grundkörpers (10) hat eine z.B. 3,5 mm tiefe, hier 12-eckige Deckelausnehmung (65). Die Deckelausnehmung erstreckt sich von der vorderen bis zur hinteren Längsseitenwandung des Grundkörpers (10). Von der Deckelausnehmung (65) aus ragt eine z.B. 7 mm tiefe Zylinderausnehmung (55) in den Grundkörper (10) in Richtung der Führungsnut (20) hinein, vgl. Figur 2. Die Zylinderausnehmung (55) hat hier einen ovalen Querschnitt, dessen Länge z.B. 54 % der Grundkörpergesamtlänge entspricht. Die Breite der Zylinderausnehmung (55) misst z.B. 53,7 % ihrer Länge. Die beiden Radien des ovalen Querschnitts entsprechen der halben Breite der Zylinderausnehmung (55). Um die Zylinderausnehmung (55) herum befindet sich eine umlaufende Dichtsitzvertiefung (56) mit planem Grund. Die darin anzuordnende Flachdichtung (79) ist in Figur 4 auf dem Deckel (71) liegend dargestellt.

Im Bereich der Dichtsitzvertiefung (56) sind vier Bodenbohrungen (57) angeordnet, von denen je zwei eine Druckluftbohrung (58) schneiden. Letztere sind zwei senkrecht zu den langen Grundkörperseitenwandungen angeordnete Bohrungen. Nach Figur 3 ist die eine mit einem "O" für "Open" und die andere mit einem "C" für "Close" bezeichnet. Die Bodenbohrung (57), die die mit "C" bezeichnete Druckluftbohrung (58) schneidet, schneidet eine weitere über der Druckluftbohrung (58) gelegene Querbohrung (59). Letztere ist mit einem Gewindestift dicht verschlossen. Über diese Querbohrung (59) kann die Zylinderausnehmung (55) in ihrer Bodennähe mit Druckluft versorgt werden.

Im Zentrum des Bodens der Zylinderausnehmung (55) befindet sich eine Durchgangsbohrung (61), die die Zylinderausnehmung (55) mit der Führungsnut (20) verbindet. Mittig weist die Durchgangsbohrung (61) einen Einstich zur Aufnahme eines Kolbenstangendichtringes auf.

Zur Befestigung des Grundkörpers (10) an einem Maschinenschlitten (6) verfügt dieser über vier vertikal Bohrungen (15) und zwei Querdurchgangsbohrungen (16). In Figur 1 werden speziell die vertikalen Bohrungen (15) zur Befestigung benutzt. Bis auf zwei einander diagonal gegenüberliegenden Bohrungen sind alle anderen Befestigungsbohrungen (15, 16) mit den zu den jeweiligen Befestigungsschrauben passenden Senkungen ausgestattet.

Der Grundkörper (10) weist auf der in Figur 3 dargestellten großen Seitenwandung im mittleren Bereich zwei auch zu dieser Seitenwandung hin offene Sensorausnehmungen (66) auf. Ihre Mittellinien sind parallel zur Mittellinie (3) der Vorrichtung orientiert. Ihre großteils u-förmigen Querschnitte werden im Bereich der Seitenwandung durch beidseits - als Fixierschutz für einsetzbare Kolbenpositionssensoren - vorspringende Hintergriffe verengt.

Der Deckel (71), der mit geringem Spiel in die 12-eckige Deckelausnehmung (65) passt, vgl. Figur 4, hat zentral eine zweistufige Vertiefung (73), in die der Kolben (121) des pneumatischen Antriebs (80) in der Greiferschließstellung partiell hineinragen kann. Um die Vertiefung (73) sind vier Befestigungsbohrungen (78) angeordnet, über die der Deckel (71) mit dem Grundkörper (10), unter Zwischenlage der Flachdichtung (79), dicht mit vier Zylinderschrauben (68), vgl. Figur 1, verschraubt wird. Zur Aufnahme der Schraubenköpfe der Zylinderschrauben (68) weist der Deckel (71) Senkungen oder Einfräsungen auf, die in den Bereich der Längsseitenwandungen reichen, vgl. Figuren 1 und 3.

Speziell im Bereich der hinteren, gewölbten Seitenwandung des Deckels (71) hat dieser z.B. vier zum Grundkörper (10) hin orientierte Sacklochbohrungen (76), von denen zwei sich in der elastischen Flachdichtung (79) fortsetzen, vgl. Figur 4. Je zwei Sacklochbohrungen (75) münden in eine lange durchgehende Querbohrung (77), die an den Längsseitenwandungen des Deckels (71) mit Gewindestiften verschlossen ist. Die nach Figur 4 innerhalb der Umrandung der Flachdichtung (79) gelegenen Sacklochbohrungen (75) dienen, während des Greiferlösevorganges, als Auslassbohrungen für die Druckluft. Diese Druckluft wird über die mit "O" gekennzeichnete Bohrung (58) in den Grundkörper (10) gepresst, um von dort über die vertikale Bodenbohrung (57) durch die Flachdichtung (79) hindurch in die Querbohrung (77) zu gelangen.

In dem von der Zylinderausnehmung (55) und dem Deckel (71) umgebenen Zylinderinnenraum (4) ist ein ovaler Kolben (121) mit seiner zweiteiligen Kolbenstange (131, 132) angeordnet. Der Kolben (121), dessen mittlere Wandstärke im Ausführungsbeispiel weniger als ein Sechstel der Grundkörperhöhe beträgt, hat zentral eine dreistufige Durchgangsbohrung (135), wobei die mittlere Stufe den kleinsten Durchmesser von z.B. 3,2 mm aufweist.

Die kolbenstangenseitige Bohrungsstufe hat zur Aufnahme einer Kolbenstangenhülse (131) einen Durchmesser von 5 mm. Um die Durchgangsbohrung (135) herum hat der Kolben (121) dort einen 0,2 mm hohen scheibenförmigen Vorsprung (124), der als oberer Anschlag des Kolbens (121) dient. Sein zylindrischer Rand kann auch der Innenführung einer Schraubendruckfeder dienen.

Der ovale Kolben (121) besitzt zur Abdichtung gegenüber der Zylinderausnehmungswandung des Grundkörpers (10) einen umlaufenden, in einer Dichtnut gelagerten Quaddichtring. Im Bereich der Dichtnut weist der Kolben (121) mindestens eine Druckausgleichsbohrung (127) auf, deren Mittellinie z.B. parallel zur Mittellinie (3) verläuft und die den Kolben (121) im Bereich der Dichtnut schneidet. Über die mindestens eine Druckausgleichsbohrung (127), deren Durchmesser z.B. 0,7 mm beträgt, gelangt während der Druckluftzufuhr die Druckluft vor den Quaddichtring, um diesen sicher und schnell an der dem Überdruck abgewandten Nutflanke der Dichtnut anzulegen.

Die Kolbenbodenseite (122), vgl. Figur 5, weist ebenfalls einen Vorsprung (125) auf, in dessen zentraler Senkung (128) der Kopf der Kolbenstangenschraube (132) sitzt. Der Kolben (121) hat im vorderen Bereich des Vorsprungs (125) zwei Sacklochbohrungen (126). In diese Sacklochbohrungen werden bei Bedarf Scheibenmagnete (136) für die Kolbenpositionsüberwachung eingeklebt.

Die Kolbenstange (131, 132) besteht hier aus der Kolbenstangenschraube (132), z.B. eine Senkkopfschraube, und einer auf ihr aufgesteckten Kolbenstangenhülse (131). Diese beiden Teile bilden zusammen mit dem Kolben (121) und Doppelschiebekeil (81) des Doppelschiebekeilgetriebes (80) eine formsteife Baugruppe, sobald die Kolbenstangenschraube (132) mittig in eine Senkbohrung (95) des Doppelschiebekeils (81) eingesteckt und in der an die Senkbohrung anschließende Gewindebohrung (96) festgeschraubt wird.

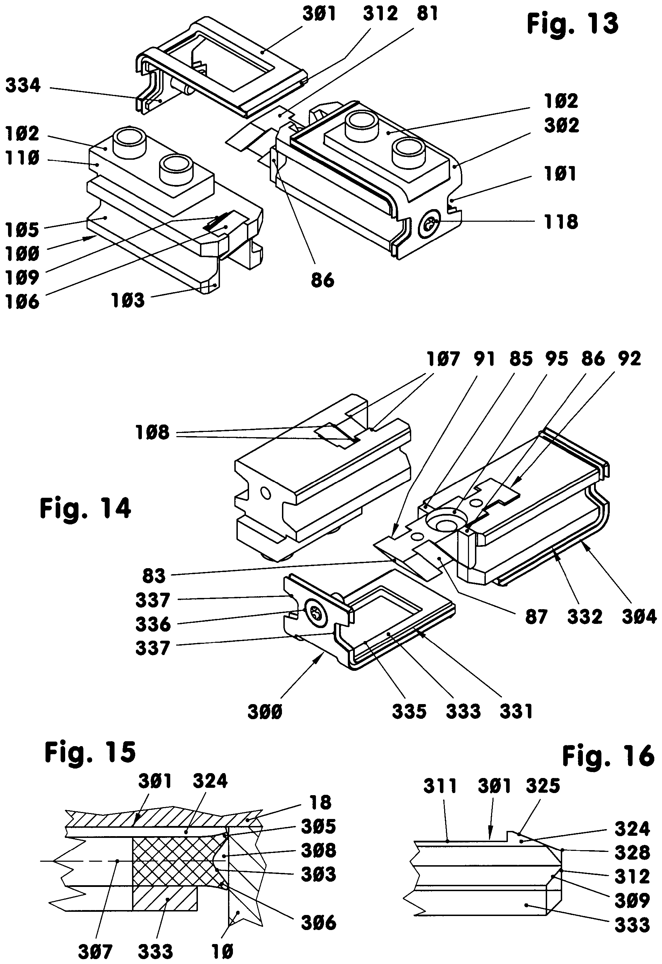

Der Doppelschiebekeil (81), der in der Führungsnut (20) als Teil eines Doppelschiebekeilgetriebes (80) angeordnet ist, ist im Wesentlichen ein vierkantstabartiges Bauteil mit quadratischem Querschnitt. In seinem mittleren Bereich ist beidseitig jeweils ein seitlich senkrecht abstehender Stützsteg (85, 86) angeformt, vgl. Figuren 13 und 14. Der Stützsteg (85, 86), der sich parallel zur Mittellinie (3) über die gesamte Doppelschiebekeilhöhe erstreckt, ist 1,2 mm breit. Er steht 1,8 mm über seine Quadergrundform über.

Der Doppelschiebekeil (81) weist an seinen stirnseitigen Enden jeweils eine im Schiebekeilwinkel abgeschrägte Stirnfläche (83, 84) auf. Der Schiebekeilwinkel liegt z.B. zwischen 20 und 50 Winkelgraden gegenüber der Greifrichtung (9). Im Ausführungsbeispiel beträgt er 50 Winkelgrade.

Parallel zu den abgeschrägten Stirnseiten (83, 84) befinden sich jeweils zwischen einer Stirnseite (83, 84) und einem Stützsteg (85, 86), pro Längsseite des Doppelschiebekeils (81), eine Keilnut (87). Die jeweilige Keilnut (87) ist parallel zu der nächstgelegenen Stirnseite (83, 84) orientiert. Sie hat dabei einen rechteckigen Querschnitt. Der Doppelschiebekeil (81) hat somit pro Längsseite zwei Keilnuten (87). Da er zur vertikalen Mittenlängsebene (8) symmetrisch aufgebaut ist, liegt jeder Keilnut (87) einer Längsseite eine zweite gegenüber. Auf diese Weise bildet jeder stirnseitige Bereich des Doppelschiebekeils (81) einen - im Querschnitt betrachtet - schräg angeordneten T-förmigen Keilsteg (91, 92).

Jeder Keilsteg (91, 92) des Doppelschiebekeils (81) greift formschlüssig in einen in der Führungsnut (20) gelagerten Schlitten (100, 101) ein. Jeder der Schlitten ist primär ein quaderförmiger Körper, in den beidseitig Schlittenführungsnuten (105) eingearbeitet sind. Mit diesen Nuten (105) ist der einzelne Schlitten (100, 101) auf den Führungsschienen (31, 32) gleitgelagert. Die Schlitten (100, 101) sind aus dem Einsatzstahl 16MnCr5 gefertigt. Ggf. wird als Werkstoff auch ein Vergütungsstahl oder ein rost- und säurebeständiger Stahl verwendet.

Der einzelne Schlitten (100, 101), dessen Breite z.B. 0,2 mm kleiner ist als die Breite der Führungsnut (20), hat in der dem Doppelschiebekeil (81) zugewandten Stirnfläche (103) eine schräg angeordnete T-Nut (106), mit der der Schlitten (100, 101) den Keilsteg (91, 92) des Doppelschiebekeils (81) mit einem unter 0,1 mm liegenden Spiel umgreift. Nach den Figuren 13 und 14 sind in den Grund der T-Nut (106) mit Schmiermittel befüllbare Schmiertaschen (109) eingearbeitet. Auf der dem Doppelschiebekeil (81) abgewandten Stirnfläche weist der einzelne Schlitten (100, 101) eine Gewindebohrung (115) auf, deren Mittellinie auf der Mittenlängsebene (8) liegt. Über diese Gewindebohrung (115) kann die Führungsnutdichtung (300) befestigt werden.

Auf der Oberseite jedes Schlittens (100, 101) befindet sich ein z.B. quaderförmiger, z.B. 2,8 mm hoher Adapteraufsatz (110), der bei montiertem Schlitten (100, 101) oben um z.B. 1,2 mm - über die Gehäuseoberseite (12) überstehend - aus der Führungsnut (20) herausragt. Zugleich steht der Adapteraufsatz (110) über die jeweils außenliegende, der T-Nut (106) abgewandte Stirnseite um z.B. 1,5 mm über. Die ebene Oberseite (102) des Adapteraufsatzes (110) hat zwei mit Zylindersenkungen ausgestattete Gewindebohrungen, an denen die Greifbacken (1, 2) lösbar befestigt werden. In den Zylindersenkungen stecken Zentrierhülsen zur präzisen, zumindest formschlüssigen Positionierung der Greifbacken (1, 2) auf den Schlitten(100, 101). Ggf. sind dort die Greifbacken (1, 2) auch direkt angeformt oder unlösbar fixiert.

Die Schlitten (100, 101) sind in der Führungsnut (20), vgl. Figur 2, so hintereinander angeordnet, dass sich bei minimalem Greifbackenabstand ihre einander zugewandten Stirnseiten (103) kontaktieren oder zumindest fast berühren.

Der mittlere Bereich der Nutöffnung der Führungsnut (20) ist mit einer z.B. rechteckigen Abdeckplatte (18) verschlossen. Die Abdeckplatte (18) ist so breit ausgelegt, dass die beiden Schlitten (100, 101), in Schließstellung der Greiferbacken (1, 2), diese gerade noch nicht berühren.

Um das Gehäuseinnere (5) und die Führungsschienen (31, 32) vor Schmutz oder sonstigen verschleißfördernden Verunreinigungen zu schützen, werden nach den Figuren 13 und 14 auf den Schlitten (100, 101) winkelförmige Führungsnutdichtungen (300) aufgesetzt und festgeschraubt. Dabei umgibt die einzelne Führungsnutdichtung (300) im Ausführungsbeispiel den Adapteraufsatz (110) des jeweiligen Schlittens (100, 101).

Die einzelne Führungsnutdichtung (300) besteht im Wesentlichen aus zwei Teilen pro Schlitten (100, 101): dem Dichtungsträger (331, 332) und dem Dichtungskörper (301, 302). Der Dichtungsträger (331, 332) ist ein aus einem rostfreien Stahl gestanzter Blechwinkel, der einen langen Schenkel (333) und einen kurzen Schenkel (334) hat. Der Blechwinkel ist schmäler als die Nutbreite der abzudichtenden Führungsnut (20).

Der lange Schenkel (333) hat eine rechteckige Positionierausnehmung (335), mit der er im montierten Zustand die Greifbackenmontagebasis des jeweiligen Schlittens (100, 101) umgibt. Der kurze Schenkel (334) besitzt ca. mittig eine Montagebohrung (336) und seitlich jeweils eine Nut (337). Die Montagebohrung dient der Durchführung der die Führungsnutdichtung (300) am Schlitten haltenden Schraube (118). Jede Nut (337) umgibt mit Spiel eine Führungsschiene (31, 32).

Auf jeden Dichtungsträger (331, 332) ist der über diesen ringsherum geringfügig überstehender Dichtungskörper (301, 302) befestigt angeordnet. Der elastische Dichtungskörper (301, 302) dichtet das von der Führungsnut (20) umschlossene Gehäuseinnere (5) entlang der Grundkörperoberseite (12) und entlang der Grundkörperstirnseite (14) zur Umgebung hin ab.

An den Führungsnutwandungen (23-25) liegt der einzelne Dichtungskörper (301, 302) mit einem doppellippigen Profil (303) an. Das Profil (303) hat eine obere, äußere Lippe (305), die als erste Barriere gegen von außen eindringenden Schmutz in Form von Staub und/oder Feuchtigkeit dient. Durch die werkstoffeigene Spannkraft wird die Lippe (305) nach dem Einbau geringfügig nach oben gedrängt. Eine bezüglich Größe und geometrischen Abmessungen vergleichbare Lippe (306) ist zum Gehäuseinnenraum (5) hin geneigt. Sie hat u.a. die Aufgabe, das Schmiermittel des Doppelschiebekeilgetriebes (80) im Gehäuseinnenraum (5) zurückzuhalten. Die Lippe (306) ist zumindest nahezu symmetrisch zur oberen, äußeren Lippe (305) ausgeführt, wobei die in Figur 15 eingezeichnete Achse (307) als Symmetrielinie dient.

Dabei schließen die beiden Dichtlippen (305, 306) einen kanalartigen, z.B. mindestens 0,25 mm tiefen Hohlraum (308) ein, der an der inneren Stirnseite (312) mit einer v-förmigen Öffnung (309) endet. Entlang der inneren Stirnseite (312) weist die Außenseite (311) des Dichtungskörpers (301, 302) eine dritte Dichtlippe (324) auf, die bei einem Verfahren der Schlitten (100, 101) an der Unterseite der Gehäuseabdeckung (18) entlang gleitet. Die Dichtlippe (324), vgl. Figur 16, hat die Form eines Keils, dessen Vorderkante (328) in Richtung der Grundkörpermittellinie (3) weist.

Der Dichtungskörper (301, 302) ist als Kautschukwerkstoff im Ausführungsbeispiel am Dichtungsträger anvulkanisiert. Er kann aber auch als separates Bauteil hergestellt sein, das abschließend auf den Dichtungsträger (331, 332) aufgeklebt wird.

Beim Löse- und/oder Greifhub bewegen sich die Dichtungskörper (301, 302) zusammen mit den Dichtungsträgern (331, 332) und den Schlitten (100, 101) innerhalb der Führungsnut (20) hin und/oder her. Beim Greifhub wirkt die innere Dichtlippe (306) als ein das Schmiermittel vor sich herschiebender Abstreifer. Beim Lösehub übernimmt die äußere Dichtlippe (305) die Aufgabe des die Führungsschiene (31, 32) und die Führungsnut (20) reinigenden Abstreifers.

Für die Schließ- bzw. Greifbewegung wird der Kolben (121), vgl. Figur 2, der sich zusammen mit dem Doppelschiebekeil (81) in seiner oberen Endlage befindet, z.B. mit Druckluft aus dieser Position heraus nach unten bewegt. Dazu wird seine Kolbenstangenseite (123) mit Druckluft beaufschlagt. Der sich nach unten bewegende Doppelschiebekeil (81) zieht die Schlitten (100, 101) in der Führungsnut (20) nach innen zur Mitte hin. Die Kombination aus Kolben (121), Kolbenstange (131, 132) und Doppelschiebekeil (81) wird zusätzlich in den Quernuten (36) der Führungsschienen (31, 32) geführt. Dazu liegen die Stützstege (85, 86) mit einem Spiel, das kleiner ist als 0,05 mm, an den Seitenflanken der Quernuten (36) an. Die Stirnflächen der Stützstege (85, 86) kontaktieren den jeweiligen Nutgrund der Quernuten (36) nicht.

Bei der Schließbewegung kommen die Keilflächen (108) am Doppelschiebekeil (81) zur Anlage. Sobald sich die Greifbacken (1, 2) am Werkstück (7) angelegt haben, stoppt die Bewegung bei einer Aufrechterhaltung der vollen Klemmkraft.

Zum Lösen des Werkstückes (7) wird die Kolbenbodenseite mit Druckluft beaufschlagt. Der sich nach oben bewegende Verbund aus dem Kolben (121) und dem Doppelschiebekeil (81) drückt die Schlitten (100, 101) bzw. die Greifbacken (1, 2) solange auseinander, bis die Kolbenstangenseite (123) am Grund der Zylinderanmehmung (55) zur Anlage kommt. Hier kontaktieren die Keilflächen (107) bei der Lösebewegung den Doppelschiebekeil (81).

Zur Erhöhung der Klemm und Lösekraft können z.B. im Zylinder mehrere Kolben hintereinander angeordnet werden. Auch ist es möglich, den Kolben in mindestens einer Hubrichtung mittels einer mechanischen Feder anzutreiben oder zusätzlich zu unterstützen.

### Bezugszeichenliste:

- 1, 2: Greifelemente, Greifbacken
- 3: Mittellinie zu (10, 34, 82)
- 4: Zylinderinnenraum
- 5: Gehäuseinnenraum, Gehäuseinneres
- 6: Maschinenschlitten, Maschinenteil, Handhabungsgeräteteil
- 7: Werkstück
- 8: vertikale Mittenlängsebene
- 9: Greifrichtung, Schlittenverfahrrichtung

- 10: Grundkörper, Gehäuse
- 11: Führungsabschnitt
- 12: Grundkörperoberseite
- 13: Grundkörperunterseite
- 14: Grundkörperstirnseite
- 15: Befestigungsbohrungen, vertikal
- 16: Quergangsbohrungen
- 17: Gewindebohrungen für Sperrluft
- 18: Gehäuseabdeckung, Abdeckplatte
- 19: horizontale Führungsmittenlängsebene, Spiegelebene

- 20: Führungsnut
- 21: Nutseite, links
- 22: Nutseite, rechts
- 23, 24: Seitenwandungen, Führungsnutwandungen
- 25: Nutboden, Führungsnutwandungen
- 26, 261: Schienenführungsnut
- 27: Senkbohrung für Schrauben zu (31, 32)
- 28: Passstiftbohrungen
- 29: vertikale Führungsmittenlängsebene

- 31, 32: Führungsschiene, Schlittenführungsschiene
- 33, 34,: Tragflanken
- 35: Fläche zwischen (33) und (34)
- 36: Quernut
- 37: Grundfläche, Unterseite von (31, 32); Fläche
- 38: Gewindebohrungen
- 39: Passstiftbohrungen

- 41: Senkschrauben
- 42: Passstifte
- 45: Gewindebohrung in äußerer Stirnseite
- 49: vertikale Mittenquerebene

- 51: Antriebsabschnitt
- 55: Zylinderausnehmung, oval
- 56: Dichtsitzvertiefung für Flachdichtung
- 57: Bodenbohrungen
- 58: Druckluftbohrungen
- 59: Querbohrung

- 61: Durchgangsbohrung, mittig
- 65: Deckelausnehmung
- 66: Sensorausnehmungen
- 68: Zylinderschrauben für (71)
- 71: Deckel
- 73: Vertiefung
- 75, 76: Sacklochbohrungen, innen, in Flachdichtung
- 77: Querbohrungen
- 78: Befestigungsbohrungen
- 79: Flachdichtung

- 80: Doppelschiebekeilgetriebe
- 81: Doppelschiebekeilelement, Doppelschiebekeil, Getriebebauteil
- 83, 84: Stirnseiten, Stirnflächen, schräg
- 85, 86: Stützstege
- 87: Keilnut
- 91, 92: Keilsteg, T-förmig
- 95: Senkbohrung
- 96: Gewindebohrung

- 100, 101: Schlitten
- 102: Oberseite
- 103: Stirnseite, Stirnfläche
- 105: Schlittenführungsnuten
- 106: T-Nut
- 107: Keilflächen, Öffnungsanlage
- 108: Keilflächen, Schließanlage
- 109: Schmiertaschen

- 110: Adapteraufsatz
- 112: Ausnehmung
- 113: Führungsschienenträger
- 114: Schraube
- 115: Gewindebohrung für (300)
- 118: Schraube für (300)

- 120: Zylinder-Kolben-Einheit; Antrieb, pneumatisch
- 121: Kolben, oval
- 122: Kolbenbodenseite
- 123: Kolbenstangenseite
- 124: Vorsprung, scheibenförmig, Anschlag
- 125: Vorsprung, kolbenbodenseitig, zylindrisch
- 126: Sacklochbohrungen für (136)
- 127: Druckausgleichsbohrung
- 128: Senkung

- 131: Kolbenstangenhülse, Kolbenstange
- 132: Kolbenstangenschraube, Kolbenstange
- 135: Durchgangsbohrung
- 136: Scheibenmagnete

- 211: Nutgrund, durchgehend, plan; Fläche
- 212: Nutgrundabschnitt, schräg; Abschnitt
- 213: Nutgrundabschnitt, schräg, Abschnitt
- 214: Nutgrundabschnitt, Mitte; parallel zu (29); Abschnitt

- 221: Langloch mit Senkung in (10)

- 231: Führungsteilschiene
- 232: Führungsteilschiene
- 233: Grundfläche, Unterseite von (231)
- 234: Grundfläche, Unterseite von (232)
- 235: Oberseite von (231)
- 236: Oberseite von (232)
- 237: Gewindebohrung
- 238: Gewindebohrung, Gewindesacklochbohrung
- 239: Fase
- 240: Schraube

- 241: Führungsschiene, längsgeteilt, Kontaktfuge ist geneigt gegenüber (29)
- 242: Sockel
- 243: Trapezaufsatz
- 244: Langloch
- 245: Befestigungsbohrung
- 248: Schraube

- 251: Führungsschiene, längsgeteilt, Kontaktfuge ist geneigt gegenüber (19)
- 252: Schienenteil, oben
- 253: Schienenteil, unten
- 254: Ausnehmung, unten von (253)

- 261: Schienenführungsnut
- 263: Führungsnutenabschnitt
- 264: Führungsnutenabschnitt

- 293: Kontaktfuge zwischen (242) und (243)
- 294: Kontaktfuge zwischen (100) und (113)
- 295: Kontaktfuge zwischen (252) und (253)

- 297: Kontaktfuge, parallel zu (9)
- 298: Kontaktfugen, geneigt
- 299: Kontaktfugen, geneigt

- 300: Führungsnutdichtung
- 301, 302: Dichtungskörper, Elastomerkörper
- 303: Profil, seitlich
- 304: Doppellippe
- 305: Lippe, außen, Dichtlippe
- 306: Lippe, innen, Dichtlippe
- 307: Symmetrieachse, Mittellinie
- 308: Hohlraum, kanalartig
- 309: Öffnung
- 311: Außenseite
- 312: Stirnseite

- 324: Dichtungslippe, Einfachlippe
- 325: Dichtflanke
- 328: Vorderkante

- 331, 332: Dichtungsträger, Blechwinkel
- 333: Schenkel, lang
- 334: Schenkel, kurz
- 335: Positionierausnehmung
- 336: Montagebohrung
- 337: Nuten

## Patentansprüche

1. Greifvorrichtung mit bewegliche Greifelemente (1, 2) tragenden Schlitten (100, 101), wobei die Schlitten (100, 101) in Greifrichtung (9) der Greifelemente (1, 2) hintereinander in einer gemeinsam genutzten, in einem Grundkörper (10) angeordneten, zu den Greifelementen (1, 2) hin zumindest bereichsweise offenen Führungsnut (20) parallel zur Greifrichtung (9) -zwischen einer Öffnungs- und Schließstellung -antreibbar geführt und quer zur Greifrichtung (9) allseitig abstützend gelagert sind,
- wobei die offene Führungsnut (20) zwei einander gegenüberliegende Führungsnutwandungen (23, 24) aufweist, die spiegelbildlich zu einer vertikalen Führungsmittenlängsebene (29) orientiert sind,
- wobei in jeder Führungsnutwandung (23, 24) eine Schienenführungsnut (26, 261) angeordnet ist,
- wobei in jeder Schienenführungsnut (26, 261) mindestens eine Schlittenführungsschiene (31, 32) befestigt ist,
- wobei mindestens eine Schienenführungsnut (26, 261) und mindestens eine darin gelagerte Schlittenführungsschiene (31, 32) pro Schlitten (100, 101) oder pro Schlittenpaar jeweils eine sich gegenseitig in einer Kontaktfuge (297, 298, 299) kontaktierende Fläche hat, die gegenüber der Schlittenverfahrrichtung (9) in einem Winkel von 0,3 bis 1,3 Winkelgraden geneigt ist und
- wobei der Bereich des Querschnittes der Schlittenführungsschiene (31, 32), der aus der Schienenführungsnut (26, 261) herausragt, die Form eines Trapezes hat.

2. Greifvorrichtung gemäß Anspruch 1, **dadurch gekennzeichnet, dass** die Führungsnut (20) auf einer ersten Nutseite (21) mindestens eine Schienenführungsnut (26) aufweist, deren Nutgrund (211) parallel zur vertikalen Führungsmittenlängsebene (29) ausgerichtet ist.

3. Greifvorrichtung gemäß Anspruch 1, **dadurch gekennzeichnet, dass** die Führungsnut (20) auf einer zweiten Nutseite (22) mindestens eine Schienenführungsnut (261) aufweist, deren Nutgrund sich in mindestens zwei Abschnitte (212, 213, 214) aufteilt, von denen zwei (212, 213) gegenüber der vertikalen Führungsmittenlängsebene (29) und der Schlittenverfahrrichtung (9) jeweils in einem Winkel von 0,3 bis 1,3 Winkelgraden geneigt sind und jeder der Abschnitte (212, 213) eine Führungsteilschiene (231, 232) lagert.

4. Greifvorrichtung gemäß Anspruch 3, **dadurch gekennzeichnet, dass** die Nutgrundabschnitte (212, 213) einen Winkel einschließen, der entweder in einem Bereich von 181,6 ± 1 Winkelgraden oder in einem Bereich von 178,4 ± 1 Winkelgraden liegt.

5. Greifvorrichtung gemäß Anspruch 3, **dadurch gekennzeichnet, dass** die Nutgrundabschnitte (212, 213) gegenüber der vertikalen Führungsmittenlängsebene (29) einen Winkel von 0,3 bis 1,3 Winkelgraden einschließen und zugleich parallel zueinander orientiert sind.

6. Greifvorrichtung gemäß Anspruch 3, **dadurch gekennzeichnet, dass** die Schlittenführungsschienen (31, 32, 241, 251) oder die Führungsteilschienen (231, 232) jeweils an mindestens einer Stirnseite eine Gewindebohrung (45) oder einen Adapteranschluss aufweisen.

7. Verfahren zur Erhöhung der Führungsgenauigkeit von bewegliche Greifelemente (1, 2) tragenden Schlitten (100, 101) einer Greifvorrichtung, wobei die Schlitten (100, 101) in Greifrichtung (9) der Greifelemente (1, 2) hintereinander in einer gemeinsam genutzten, in einem Grundkörper (10) angeordneten, zu den Greifelementen (1, 2) hin zumindest bereichsweise offenen, eine vertikale Führungsmittenlängsebene (29) aufweisende Führungsnut (20) parallel zur Greifrichtung (9) - zwischen einer Öffnungs- und Schließstellung - antreibbar geführt und quer zur Greifrichtung (9) allseitig abstützend gelagert sind, wobei in Schienenführungsnuten (26, 661) oder Führungsnutenabschnitten (263, 264) des Grundkörpers (10) Schlittenführungsschienen (31, 32) oder Führungsteilschienen (231, 232) angeordnet sind, die im Bereich des jeweiligen Querschnittes der einzelnen Schlittenführungsschiene (31, 32) oder der einzelnen Führungsteilschiene (231, 232), der aus der Schienenführungsnut (26, 261) oder dem jeweiligen Führungsnutenabschnitt (263, 264) herausragt, jeweils die Form eines Trapezes haben, und wobei bei den Schienenführungsnuten (26, 261) oder Führungsnutenabschnitten (263, 264) und den Schlittenführungsschienen (31, 32) oder Führungsteilschienen (231, 232) mit gegenüber der vertikalen Führungsmittenlängsebene (29) geneigten Kontaktfugen (298, 299) das Führungsspiel der Schlitten (100, 101) durch ein Verschieben der Schlittenführungsschienen (31, 32) oder Führungsteilschienen (231, 232) in Schlittenverfahrrichtung (9) um ± 1 bis 3 mm durch Verschieben mit Hilfe eines Werkzeugs eingestellt wird.

## Claims

1. Gripping device having carriages (100, 101) supporting displaceable gripping elements (1, 2), wherein the carriages (100, 101) are supported such that they are guided one after the other in the gripping direction (9) of the gripping elements (1, 2) in a shared guide groove (20) arranged in a main body (10), which guide groove (20) is open toward the gripping elements (1, 2) in at least some regions, and the carriages can be driven parallel to the gripping direction (9) between an opening and closing position and are supported transversely to the gripping direction (9) on all sides,
- wherein the open guide groove (20) has two opposite guide groove walls (23, 24), which are oriented mirror-symmetrical to a vertical guide centre longitudinal plane (29),
- wherein a rail guide groove (26, 261) is arranged in each guide groove wall (23, 24),
- wherein at least one carriage guide rail (31, 32) is attached in each rail guide groove (26, 261),
- wherein, per carriage (100, 101) or per pair of carriages, at least one rail guide groove (26, 261) and at least one carriage guide rail (31, 32) supported within the same have respective surfaces making contact with each other in contact joints (297, 298, 299), which respective surfaces are inclined at an angle of 0.3 to 1.3 degrees in relation to the carriage displacement direction (9), and
- wherein the area of the cross-section of the carriage guide rail (31, 32), which protrudes from the rail guide groove (26, 261), has the shape of a trapezoid.

2. Gripping device according to claim 1, **characterized in that** the guide groove (20) has at least one rail guide groove (26) on a first groove side (21), the groove base (211) of which rail guide groove (26) is aligned parallel to the vertical guide centre longitudinal plane (29).

3. Gripping device according to claim 1, **characterized in that** the guide groove (20) has at least one rail guide groove (261) on a second groove side (22), the groove bottom of which is divided into at least two portions (212, 213, 214), of which two (212, 213) are each inclined at an angle of 0.3 to 1.3 degrees in relation to the vertical guide centre longitudinal plane (29) and the carriage displacement direction (9) and each of the portions (212, 213) supports a partial guide rail (231, 232).

4. Gripping device according to claim 3, **characterized in that** the groove bottom portions (212, 213) form an angle that is either in a range of 181.6 ± 1 degrees or in a range of 178.4 ± 1 degree.

5. Gripping device according to claim 3, **characterized in that** the groove bottom portions (212, 213) form an angle of 0.3 to 1.3 degrees in relation to the vertical guide centre longitudinal plane (29) and are at the same time oriented parallel to each other.

6. Gripping device according to claim 3, **characterized in that** the carriage guide rails (31, 32, 241, 251) or the partial guide rails (231, 232) each have a threaded hole (45) or an adapter connector on at least one front side.

7. Method for increasing the guiding accuracy of carriages (100, 101) supporting displaceable gripping elements (1, 2) of a gripping device, wherein the carriages (100, 101) are supported such that they are guided one after the other in the gripping direction (9) of the gripping elements (1, 2) in a shared guide groove (20) arranged in a main body (10), which guide groove (20) is open toward the gripping elements (1, 2) in at least some regions, and the carriages (100, 101) can be driven parallel to the gripping direction (9) - between an opening and closing position - and are supported transversely to the gripping direction (9) on all sides, wherein carriage guide rails (31, 32) or partial guide rails (231, 232) are arranged in rail guide grooves (26, 661) or guide groove portions (263, 264) of the main body (10), which each have the shape of a trapezoid in the area of the respective cross-sections of the individual carriage guide rails (31, 32) or the individual partial guide rails (231, 232) which protrude from the rail guide groove (26, 261) or the respective guide groove portions (263, 264), and wherein contact joints (298, 299) which are inclined in relation to the vertical guide centre longitudinal plane (29) are used in the rail guide grooves (26, 261) or guide groove portions (263, 264) and the carriage guide rails (31, 32) or partial guide rails (231, 232) to adjust the guide play of the carriages (100, 101) by displacing the carriage guide rails (31, 32) or partial guide rails (231, 232) in the carriage displacement direction (9) by ± 1 to 3 mm by displacing them by means of a tool.

## Revendications

1. Dispositif préhenseur, pourvu de chariots (100, 101) portant des éléments préhenseurs (1, 2) mobiles, dans la direction de préhension (9) des éléments préhenseurs (1, 2), les chariots (100, 101) étant guidés les uns derrière les autres dans une rainure de guidage (20) utilisée conjointement, placée dans un corps de base (10), ouverte au moins par endroits vers les éléments préhenseurs (1, 2), en étant susceptibles d'être entraînés à la parallèle de la direction de préhension (9), entre une position d'ouverture et une position de fermeture et étant logés en assurant un appui latéral de toutes parts dans la direction de préhension (9),
- la rainure de guidage (20) ouverte comportant deux parois de rainure de guidage (23, 24) en vis-à-vis mutuel, qui sont orientées en symétrie spéculaire par rapport à un plan longitudinal de guidage médian (29) vertical,
- dans chaque paroi de rainure de guidage (23, 24) étant placée une rainure de guidage de rail (26, 261),
- dans chaque rainure de guidage de rail (26, 261) étant fixé au moins un rail de guidage de chariots (31, 32),
- pour chaque chariot (100, 101) ou pour chaque paire de chariots, au moins une rainure de guidage de rail (26, 261) et au moins un rail de guidage de chariots (31, 32) logé dans celle-ci ayant respectivement une surface se contactant réciproquement dans un joint de contact (297, 298, 299), qui par rapport à la direction de déplacement des chariots (9), est inclinée sous un angle de 0,3 à 1,3 degrés, et
- la zone de la section transversale du rail de guidage de chariots (31, 32) qui saillit hors de la rainure de guidage de rail (26, 261) ayant la forme d'un trapèze.

2. Dispositif préhenseur selon la revendication 1, **caractérisé en ce que** sur une première face de rainure (21), la rainure de guidage (20) comporte au moins une rainure de guidage de rail (26), dont le fond de rainure (211) est orienté à la parallèle du plan longitudinal de guidage médian (29) vertical.

3. Dispositif préhenseur selon la revendication 1, **caractérisé en ce que** sur une deuxième face de rainure (22), la rainure de guidage (20) comporte au moins une rainure de guidage de rail (261) dont le fond de rainure se divise en au moins de segments (212, 213, 214), dont deux (212, 213) sont respectivement inclinées sous un angle de 0,3 à 1,3 degrés par rapport au plan longitudinal de guidage médian (29) vertical et à la direction de déplacement des chariots (9) et chacun des segments (212, 213) réceptionne un rail de guidage partiel (231, 232).

4. Dispositif préhenseur selon la revendication 3, **caractérisé en ce que** les segments (212, 213) de fond de rainure incluent un angle qui se situe soit dans un ordre de 181,6 ± 1 degrés ou dans un ordre de 178,4 ± 1 degrés.

5. Dispositif préhenseur selon la revendication 3, **caractérisé en ce que** les segments (212, 213) de fond de rainure incluent par rapport au plan longitudinal de guidage médian (29) vertical un angle de 0,3 à 1,3 degrés et sont simultanément orientés à la parallèle l'un de l'autre.

6. Dispositif préhenseur selon la revendication 3, **caractérisé en ce que** respectivement sur au moins une face frontale, les rails de guidage de chariots (31, 32, 241, 251) ou les rails de guidage partiels (231, 232) comportent un taraudage (45) ou un raccord adaptateur.

7. Procédé, destiné à augmenter la précision de guidage de chariots (100, 101) portant des éléments préhenseurs (1, 2) mobiles d'un dispositif préhenseur, dans la direction de préhension (9) des éléments préhenseurs (1, 2), les chariots (100, 101) étant guidés les uns derrière les autres dans une rainure de guidage (20) utilisée conjointement, placée dans un corps de base (10), ouverte au moins par endroits vers les éléments préhenseurs (1, 2), en étant susceptibles d'être entraînés à la parallèle de la direction de préhension (9) entre une position d'ouverture et une position de fermeture et étant logés en assurant un appui latéral de toutes parts dans la direction de préhension (9),
dans des rainures de guidage de rails (26, 661) ou dans des segments de rainure de guidage (263, 264) du corps de base (10) étant placés des rails de guidage de chariots (31, 32) ou des rails de guidage partiels (231, 232), qui dans la zone de la section transversale respective du rail de guidage de chariot (31, 32) individuel ou du rail de guidage partiel (231, 232) individuel qui saillit hors de la rainure de guidage de rail (26, 261) ou du segment de rainure de guidage (263, 264) concerné, ont respectivement la forme d'un trapèze et sur les rainures de guidage de rails (26, 261) ou sur les segments de rainure de guidage (263, 264) et sur les rails de guidage de chariots (31, 32) ou sur les rails de guidage partiels (231, 232) dotés de joints de contacts (298, 299) inclinés par rapport au plan longitudinal de guidage médian (29) vertical, le jeu de guidage des chariots (100, 101) étant réglé par un déplacement des rails de guidage de chariots (31, 32) ou des rails de guidage partiels (231, 232) dans la direction de déplacement des chariots (9) de la valeur de ± 1 à 3 mm par déplacement à l'aide d'un outil.
